# EUROPÄISCHE PATENTSCHRIFT

(11) **EP 3 830 506 B1**
(45) Veröffentlichungstag und Bekanntmachung des Hinweises auf die Patenterteilung: **26.01.2022**
(21) Anmeldenummer: 19739989.2
(22) Anmeldetag: 15.07.2019
(51) Int. Cl.: C03B 40/00, F27B 9/24, C03B 35/18, F27D 3/02

(54) **ROLLE FÜR EINEN ROLLENHERDOFEN**
ROLLER FOR A ROLLER HEARTH FURNACE
ROULEAU POUR FOUR À ROULEAUX

(30) Priorität: 30.07.2018 DE 102018212702; 26.11.2018 DE 102018220216
(43) Veröffentlichungstag der Anmeldung: 09.06.2021
(73) Patentinhaber: SMS Group GmbH, 40237 Düsseldorf (DE)
(72) Erfinder: KINTSCHER, Björn, 42551 Velbert (DE); HOEN, Karl, 53567 Asbach (DE); PIEPER, Markus, 40822 Mettmann-Unterrath (DE)
(74) Vertreter: Kross, Ulrich
(86) Internationale Anmeldenummer: PCT/EP2019/068992
(87) Internationale Veröffentlichungsnummer: WO 2020/025303

(56) Entgegenhaltungen:
- WO-A1-2006/106203
- DE-A1- 4 041 217
- DE-A1- 19 504 044
- DE-A1- 19 923 114

## Beschreibung

Die Erfindung betrifft eine Rolle für einen Rollenherdofen, die eine wassergekühlte, drehbar gelagerte Tragachse aufweist, auf der beabstandet voneinander mehrere Tragringe angeordnet sind, wobei die Tragachse im axialen Bereich zwischen und neben den Tragringen mit einer Isolierung versehen ist, die aus einem Fasermaterial besteht und die mit einem den Außenumfang ihres Fasermaterials gegen die Umgebung schützenden Mittel ausgebildet ist.

Derartige Rollen eines Rollenherdofens mit ein Wärmebehandlungsgut, beispielsweise eine Bramme oder ein Blech, transportierenden Tragringen haben eine Wasserkühlung, um die Rollen vor zu hohen Temperaturen und damit verbundenem vorzeitigen Versagen zu schützen. Der damit einhergehende Wärmeentzug des Ofens respektive hohe Energieverbrauch im Ofen wird bei bekannten Rollen über eine zwischen und neben den Tragringen vorgesehene Wärmeisolierung der Tragachse aus einem Fasermaterial verringert.

Die Wärmeisolierung sorgt weiterhin dafür, dass einerseits das Wärmebehandlungsgut nicht unzulässig gekühlt und andererseits die Tragachse nicht unzulässig erhitzt wird.

Die Rollen mit einer Wärmeisolierung aus einem beispielsweise feuerfesten Fasermaterial oder einer Faserwolle weisen ein wesentlich geringeres Gewicht auf als im Stand der Technik bekannte Rollen mit einer Wärmeisolierung aus Beton.

Durch die WO 2018/059940 A1 ist dazu bekannt geworden, zwischen zumindest zwei, vorzugsweise zwischen allen, Tragringen eine Isolierung anzuordnen, wobei die Isolierung bevorzugt vollständig aus Fasermaterial besteht. Bei dem eingesetzten Fasermaterial handelt es sich vorteilhaft um Aluminium-Oxid und/oder Silizium-Oxid.

Als nachteilig erweist sich hierbei, dass das isolierende Fasermaterial durch umherfliegenden Zunder bzw. Zunderpartikel angegriffen und nach und nach abgetragen oder zerstört wird. Damit einhergehend lässt die Isolierwirkung nach und die Rollen mit den Tragringen müssen mit einem hohen Wartungsaufwand getauscht werden.

Die Standzeit der faserisolierten Rolle ist im Vergleich zu einer betonisolierten Rolle daher stark reduziert.

Durch die DE 40 41 217 A1 ist ein Durchlaufofen bekannt geworden, dessen angetriebene Rollen aus fluidgekühlten Kernrohren und auf den Kernrohren vorgesehenen Trag/Wärmedämm-Anordnungen bestehen, wobei hier der Aufwand bei der Wartung der Rollen vermindert werden soll. Dazu ist vorgesehen, dass die Isolierung des gekühlten Kernrohrs aus einer in axialer Richtung über das Kernrohr schiebbaren Trag/Wärmedämm-Anordnung besteht, die auf einem auf das Kernrohr aufschiebbaren Überrohr angeordnet ist. Das Überrohr ist mit Tragscheiben bzw. -ringen ausgebildet.

Dokument DE 199 23 114 A1 betrifft eine Rolle für einen Wärmebehandlungsofen mit einem Rollenkern, auf dem mindestens zwei Tragringe angeordnet sind, eine dazwischen angeordneten Wärmeisolierung und jeweils einem die Wärmeisolierung umgebenden äußeren Isolierrohr. Die Isolierung in DE 199 23 114 A1 besteht aus gleichartigen nebeneinander angeordneten Isolationsringen und ist mit einem hitzebeständigen Edelstahlzylinder ummantelt.

Dokument WO 2006/106203 A1 offenbart ebenfalls eine Rolle für einen Wärmebehandlungsofen mit einem Rollenkern, auf dem beabstandete Tragringe angeordnet sind. Zwischen den Tragringen ist eine einstückige Wärmeisolierung angeordnet, die aus Beton gefertigt sein kann.

Dokument DE 195 04 044 A1 offenbart eine hitzefeste Transportrolle für Durchlauföfen, mit einer von innen gekühlten Welle, auf deren Mantelfläche eine Vielzahl zylindrische Scheiben aus Faserkeramik angeordnet ist, die mit einer Druckerzeugungseinrichtung in axialer Richtung zusammengepresst werden. Diese zylindrischen Scheiben dienen als Tragringe für das zu transportierende Gut und sind nicht beabstandete.

Ferner ist im Stand der Technik bekannt, dass die Tragachse neben den Tragringen und im Zwischenbereich der Tragringe mit ringförmigen, auf die Tragachse aufschiebbaren Faserstanzteilen ausgefüllt wird. Auch hier ergeben sich die vorstehend beschrieben Nachteile wie bei dem isolierenden Fasermaterial.

Der Erfindung liegt daher die Aufgabe zugrunde, den Aufbau der Isolierung so zu verbessern, dass die negative Einwirkung von Zunder bzw. Zunderpartikeln auf das Fasermaterial deutlich verringert wird und sich somit die Standzeit der faserisolierten Rolle erhöht.

Diese Aufgabe wird erfindungsgemäß dadurch gelöst, dass bei einer aus ringförmigen Stanzteilen aufgebauten Isolierung die im axialen Bereich zwischen und neben den Tragringen angeordnete Isolierung aus kreis- bzw. ringförmigen Faserstanzteilen besteht, wobei das schützende Mittel in Form von ringförmigen Isolierscheiben aus einem widerstandsfähigeren Material als das der Faserstanzteile ausgebildet ist und jeweils zwischen zwei Isolierscheiben zumindest ein Faserstanzteil vorgesehen ist.

Der dem Wärmebehandlungsgut anhaftende, sich beim Transport mittels der Rollen durch den Rollenherdofen lösende und in der Umgebung der Rollen umherfliegende Zunder kann somit das isolierende Fasermaterial der Rolle nicht mehr abtragen oder zerstören, vielmehr wird die Oberfläche der Isolierung durch das dem Zunderaufschlag widerstehende Mittel geschützt.

Das schützende Mittel kann hierbei als Ummantelung der Isolierung ausgebildet werden. Die Ummantelung umschließt das auf der Tragachse der Rollen angeordnete, isolierende Fasermaterial vorzugsweise nahtlos über seinen gesamten Umfang, wobei die dünne Ummantelung, bezogen auf ihre Höhe, unterhalb der Transportebene der Rollen, d.h. deren Tragringen liegt.

Eine weitere Ausgestaltung sieht vor, dass die Ummantelung aus einem widerstandsfähigeren Fasermaterial als das der Isolierung besteht. Als Ummantelung kann hierbei ein Fasermaterial zur Anwendung kommen, das durch Keramikfasern in Form eines oxidkeramischen Faserverbundwerkstoffs (OCMC) oder dergleichen hartem Material verstärkt ist.

Ferner ist vorgesehen, dass die Ummantelung aus Metall oder Beton besteht. Sowohl das Metall als auch der Beton können von dem heißen Zunder bzw. den Zunderpartikeln nicht beschädigt oder durchdrungen werden, sondern prallen vielmehr von diesen ab.

Gemäß einer Ausführung der Erfindung wird vorgeschlagen, dass bei einer aus ringförmigen Stanzteilen aufgebauten Isolierung die im axialen Bereich zwischen und neben den Tragringen angeordnete Isolierung aus kreis- bzw. ringförmigen Faserstanzteilen besteht, wobei das schützende Mittel in Form von ringförmigen Isolierscheiben aus einem widerstandsfähigeren Material als das der Faserstanzteile ausgebildet ist und jeweils zwischen zwei Isolierscheiben zumindest ein Faserstanzteil vorgesehen ist.

Die Isolierscheiben, die aus einem verstärkten Keramikfasermaterial, vorzugsweise einem oxidkeramischen Faserverbundwerkstoff (OCMC) bestehen können, schützen die Faserstanzteile insofern, als der umherfliegende Zunder nicht ausschließlich auf den Außenumfang der Faserstanzteile, sondern auch auf den Außenumfang der widerstandsfähigeren Isolierscheiben auftrifft und abprallt. Durch die abwechselnde Anordnung eines kreis- bzw. ringförmigen Faserstanzteils und einer Isolierscheibe lässt sich erreichen, dass die weicheren Faserstanzteile weitestgehend geschont werden und die widerstandsfähigeren Isolierscheiben unbeeinträchtigt eine Wärmeisolierung der Tragachse gewährleisteten.

Sowohl durch die Ummantelung des isolierenden Fasermaterials als auch durch die Anordnung der Isolierscheiben neben den Faserstanzteilen wird vorteilhaft erreicht, dass sich die Standzeit der Wärmeisolierung und damit einhergehend die Standzeit der wassergekühlten Rolle erhöht, womit gleichzeitig die Energieeinsparung des Rollenherdofens über eine längere Zeit sichergestellt wird.

Weitere Merkmale und Einzelheiten der Erfindung ergeben sich aus den Patentansprüchen und der nachfolgenden Beschreibung von in den Zeichnungen dargestellten Ausführungsbeispielen der Erfindung. Es zeigen:
- Fig. 1: als Einzelheit eines Rollenherdofens in schematischer Darstellung eine wassergekühlte Rolle, die in axialer Richtung mit mehreren Tragringen ausgebildet ist und bei der sowohl zwischen als auch neben den Tragringen eine Isolierung aus Fasermaterial vorgesehen ist; und
- Fig. 2: als Einzelheit eines Rollenherdofens in schematischer Darstellung eine wassergekühlte Rolle, die in axialer Richtung mit mehreren Tragringen ausgebildet ist und bei der sowohl zwischen als auch neben den Tragringen kreis- bzw. ringförmige Faserstanzteile und Isolierscheiben vorgesehen sind.

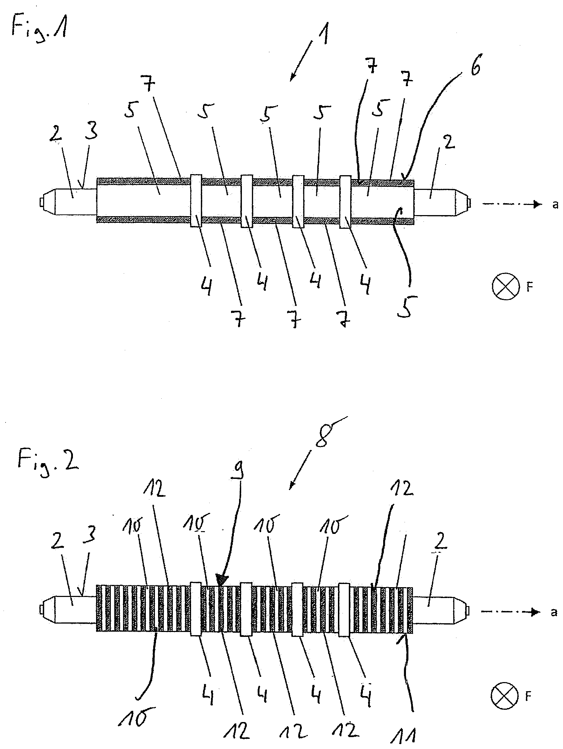

In Figur 1 ist schematisch der Aufbau einer wassergekühlten Rolle 1 dargestellt. Die Rolle 1 weist eine Achse a auf, um die sie drehen kann. Eine Förderrichtung F steht in Fig. 1 waagerecht auf der Zeichenebene; in Förderrichtung F wird ein Wärmebehandlungsgut, beispielsweise eine Bramme oder ein Blech, transportiert, das einen Rollenherdofen passiert, in den in Förderrichtung F im Abstand aufeinanderfolgend mehrere solcher Rollen 1 eingebaut sind.

Die Rolle 1 weist eine zylindrische Tragachse 2 sowie einen zylindrischen Außenumfang 3 auf. Die Tragachse 2 kann hierbei sowohl aus einem, vorzugsweise geschmiedeten oder gewalzten, massiven Stabmaterial als auch aus einem, vorzugsweise im Schleuderguß hergestellten, Rohr bestehen.

Auf der Tragachse 2 sind in axialem Abstand mehrere Tragringe 4 angeordnet. Die Tragringe 4 stellen den Kontakt mit dem zu transportierenden Wärmebehandlungsgut her.

Im axialen Bereich zwischen zwei Tragringen 4 sowie neben den jeweils äußeren Tragringen 4 ist die Tragachse 2 mit einer Isolierung 5 ausgebildet.

Als Isolierwerkstoff kommt ein feuerfestes Fasermaterial, bevorzugt aus Aluminium-Oxid und/oder aus Silizium-Oxid, beziehungsweise eine spezielle Feuerfestwolle, ebenfalls aus Aluminium-Oxid und/oder Silizium-Oxid, zum Einsatz.

Um die aus dem Fasermaterial oder der Feuerfestwolle bestehende Isolierung 5 vor im Nahbereich der Rolle 1 umherfliegenden Zunder bzw. Zunderpartikeln zu schützen, ist die Isolierung 5 mit einem den Außenumfang ihres Fasermaterials bzw. ihrer Feuerfestwolle schützenden Mittel 6 ausgebildet, wobei das schützende Mittel 6 als Ummantelung 7 der Isolierung 5 ausgebildet ist.

Die schützende Ummantelung 7 besteht bevorzugt aus einem widerstandsfähigeren Fasermaterial als die Isolierung 5, optional aus Metall oder Beton.

In Figur 2 ist schematisch eine erfindungsgemäße Ausführungsform einer wassergekühlten Rolle 8 dargestellt, die vom prinzipiellen Aufbau der eingangs beschriebenen Rolle 1 entspricht.

Im Gegensatz zu der Rolle 1 ist bei der Rolle 8 im axialen Bereich zwischen zwei Tragringen 4 sowie neben den jeweils äußeren Tragringen 4 auf der Tragachse 2 eine Isolierung 9 angeordnet, die aus kreis- bzw. ringförmigen Faserstanzteilen 10 besteht, wobei ein schützendes Mittel 11 in Form von ringförmigen Isolierscheiben 12 ausgebildet ist und jeweils zwischen zwei Isolierscheiben 12 ein Faserstanzteil 10 vorgesehen ist.

Die Faserstanzteile 10 bestehen ebenfalls aus einem feuerfesten Fasermaterial, bevorzugt aus Aluminium-Oxid und/oder aus Silizium-Oxid.

Demgegenüber sind die Isolierscheiben 12 aus einem widerstandsfähigeren Material als das der Faserstanzteile 10 gefertigt. Bevorzugt kommen hier Isolierscheiben 12 aus Keramikfasermaterial, beispielsweise einem oxidkeramischen Faserverbundwerkstoff (OCMC) zum Einsatz

Durch die abwechselnde Anordnung von einem Faserstanzteil 10 und einer Isolierscheibe 12 wird erreicht, dass die umherfliegenden Zunderpartikel nicht ausschließlich auf den Außenumfang der Faserstanzteile 10, sondern auch auf den Außenumfang der widerstandsfähigeren Isolierscheiben 12 auftreffen und abprallen. Um diesen Effekt weitergehend zu unterstützen, können die Isolierscheiben 12 eine größere Breite aufweisen als die Faserstanzteile 10.

### Bezugszeichenliste:

- 1: Rolle
- 2: Tragachse
- 3: Außenumfang
- 4: Tragring
- 5: Isolierung
- 6: schützendes Mittel
- 7: Ummantelung
- 8: Rolle
- 9: Isolierung
- 10: kreis- bzw. ringförmiges Faserstanzteil
- 11: schützendes Mittel
- 12: Isolierscheibe
- a: Achse
- F: Förderrichtung

## Patentansprüche

1. Rolle für einen Rollenherdofen, die eine wassergekühlte, drehbar gelagerte Tragachse (2) aufweist, auf der beabstandet voneinander mehrere Tragringe (4) angeordnet sind, wobei die Tragachse (2) im axialen Bereich zwischen und neben den Tragringen (4) mit einer Isolierung (5; 9) versehen ist, die aus einem Fasermaterial besteht, und die mit einem den Außenumfang ihres Fasermaterials gegen die Umgebung schützenden Mittel (6; 11) ausgebildet ist,
**dadurch gekennzeichnet,**
**dass** bei einer aus ringförmigen Stanzteilen aufgebauten Isolierung (9) die im axialen Bereich zwischen und neben den Tragringen (4) angeordnete Isolierung (9) aus kreis- bzw. ringförmigen Faserstanzteilen (10) besteht, wobei das schützende Mittel (11) in Form von ringförmigen Isolierscheiben (12) aus einem widerstandsfähigeren Material als das der Faserstanzteile (10) ausgebildet ist und jeweils zwischen zwei Isolierscheiben (12) zumindest ein Faserstanzteil (10) vorgesehen ist.

2. Rolle nach Anspruch 1, **dadurch gekennzeichnet,**
**dass** die Isolierscheiben (12) aus einem widerstandsfähigeren Fasermaterial als das der Faserstanzteile (10) bestehen.

3. Rolle nach Anspruch 1 oder 2, **dadurch gekennzeichnet,**
**dass** die Isolierscheiben (12) eine größere Breite aufweisen als die Faserstanzteile (10).

## Claims

1. Roller for a roller-hearth furnace, which comprises a water-cooled, rotatably mounted support axle (2) on which a plurality of support rings (4) are arranged at a spacing from one another, wherein the support axle (2) is provided in the axial region between and adjacent to the support rings (4) with an insulation (5; 9) which consists of a fibrous material and is constructed with means (6; 11) protecting the outer circumference of its fibrous material from the environment,
**characterised in that**
in the case of an insulation (9) constructed from annular punched parts the insulation (9) arranged in the axial region between and adjacent to the support rings (4) consists of circular or annular fibrous punched parts (10), wherein the protective means (11) is constructed in the form of annular insulating discs (12) of a more resistant material than that of the fibrous punched parts (10) and at least one respective fibrous punched part (10) is provided between each two insulating discs (12).

2. Roller according to claim 1, **characterised in that** the insulating discs (12) consist of a more resistant fibrous material than that of the fibrous punched parts (10).

3. Roller according to claim 1 or 2, **characterised in that** the insulating discs (12) have a greater width than the fibrous punched parts (10).

## Revendications

1. Rouleau destiné à un four à sole munie de rouleaux, qui présente un axe de support refroidi à l'eau (2) monté en rotation, sur lequel sont disposés plusieurs anneaux de support (4) à l'écart les uns des autres ; dans lequel l'axe de support (2) est muni d'un élément isolant (5; 9) dans la zone axiale entre les anneaux de support (4) et à côté de ces derniers, élément isolant qui est constitué d'une matière fibreuse, et qui est réalisé avec un moyen (6; 11) qui confère à la périphérie externe de sa matière fibreuse une protection contre l'environnement; **caractérisé en ce que**, dans le cas d'un élément isolant (9) élaboré à partir de pièces de forme annulaire que l'on obtient par estampage, l'élément isolant disposé dans la zone axiale entre les anneaux de support (4) et à côté de ces derniers est constitué de pièces filamentaires que l'on obtient par estampage (10) de forme circulaire, respectivement de forme annulaire ; dans lequel le moyen de protection (11) est réalisé sous la forme de disques de forme annulaire (12) procurant une isolation, constitués d'un matériau dont la capacité de résistance est supérieure à celle des pièces filamentaires que l'on obtient par estampage (10), et dans lequel on prévoit au moins une pièce filamentaire que l'on obtient par estampage (10) respectivement entre deux disques (12) procurant une isolation.

2. Rouleau selon la revendication 1, **caractérisé en ce que** les disques (12) procurant une isolation sont constitués d'un matériau dont la capacité de résistance est supérieure à celle des pièces filamentaires que l'on obtient par estampage (10).

3. Rouleau selon la revendication 1 ou 2, **caractérisé en ce que** les disques (12) procurant une isolation présentent une largeur qui est supérieure à celle des pièces filamentaires que l'on obtient par estampage (10).
